# EUROPÄISCHE PATENTANMELDUNG

(11) **EP 1 232 786 A2**
(43) Veröffentlichungstag der Anmeldung: **21.08.2002**
(21) Anmeldenummer: 02002660.5
(22) Anmeldetag: 06.02.2002
(51) Int. Cl.: B01J 19/00

(54) **Mikroreaktoren**

(30) Priorität: 15.02.2001 DE 10106953
(71) Anmelder: Cognis Deutschland GmbH & Co. KG, 40589 Düsseldorf (DE)
(72) Erfinder: Gutsche, Bernhard, Dr., 40724 Hilden (DE); Zech, Torsten, 09130 Chemnitz (DE); Hoenicke, Dieter, Prof. Dr., 76227 Karlsruhe (DE)

(57) **Zusammenfassung**

Vorgeschlagen werden neue Mikroreaktoren, bestehend aus mindestens einem auf einen Träger aufgebrachten Mikroreaktionssystem mit jeweils mindestens einem Mikroreaktionsraum, mindestens einem Zulauf für Edukte und mindestens einem Ablauf für Produkte, die sich dadurch auszeichnen, dass die Mikroreaktionssysteme mit einer inertisierenden Beschichtung ausgewählt aus der Gruppe, die gebildet wird von Siliziumdioxid, Siliziumnitrid und/oder Aluminiumoxid ausgestattet sind.

## Beschreibung

### Gebiet der Erfindung

Die Erfindung befindet sich auf dem Gebiet der Mikroreaktionsbauteile und betrifft Reaktoren im Mikroformat, die sich durch eine neue Beschichtung zur Vermeidung bzw. Verminderung von unerwünschten Reaktionen zwischen dem Träger- bzw. Reaktormaterial und den Reaktanden auszeichnen.

### Stand der Technik

Unter dem Begriff Mikrostrukturreaktor sind dem Fachmann Mikrostrukturapparate für chemische Prozesse geläufig, deren Kennzeichen es ist, dass mindestens eine der drei Raumdimensionen des Reaktionsraumes eine Abmessung im Bereich von 1 bis 2000 µm aufweist und die sich damit durch eine hohe übertragungsspezifische innere Oberfläche, kurze Verweilzeiten der Reaktanden und hohe spezifische Wärme- und Stofftransportleistungen auszeichnen. Beispielhaft sei auf die europäische Patentanmeldung **EP 0903174 A1** (Bayer) verwiesen, in der die Flüssigphasenoxidation organischer Verbindungen in einem Mikroreaktor, bestehend aus einer Schar von parallelen Reaktionskanälen, beschrieben wird. Mikroreaktoren können dabei zusätzlich mikroelektronische Komponenten als integrale Bestandteile enthalten. Im Unterschied zu bekannten mikroanalytischen Systemen besteht bei den Mikroreaktoren keineswegs die Notwendigkeit, dass alle lateralen Dimensionen des Reaktionsraumes im µm-Bereich liegen. Vielmehr werden dessen Abmessungen ausschließlich durch die Art der Reaktion bestimmt. Dementsprechend kommen für bestimmte Reaktionen auch solche Mikroreaktoren in Frage, bei denen eine gewisse Zahl von Mikrokanälen gebündelt werden, so dass Mikro- und Makrokanäle bzw. paralleler Betrieb einer Vielzahl von Mikrokanälen nebeneinander vorliegen können. Vorzugsweise sind die Kanäle parallel zueinander angeordnet, um einen hohen Durchsatz zu ermöglichen und den Druckverlust so gering wie möglich zu halten.

Mikroreaktoren weisen jedoch häufig den Nachteil auf, dass es unter Reaktionsbedingungen bedingt durch die sehr hohe spezifische Oberfläche zu unerwünschten Reaktionen zwischen den Reaktanden und dem Träger- bzw. Reaktormaterial, z. B. im Fall von Silizium als Trägerbzw. Reaktormaterial kommen kann, was gegebenenfalls bis zur Zersetzung der Ausgangsoder Zielprodukte führt.

Die Aufgabe der vorliegenden Erfindung hat daher darin bestanden, diesem Umstand abzuhelfen und neue Mikroreaktoren zur Verfügung zu stellen, die so beschaffen sind, dass sich das Träger- bzw. Reaktormaterial in den unterschiedlichsten Reaktionen und unter den unterschiedlichsten Bedingungen ganz oder weitgehend inert verhält.

### Beschreibung der Erfindung

Gegenstand der Erfindung sind neue Mikroreaktoren, bestehend aus mindestens einem auf einen Träger aufgebrachten Mikroreaktionssystem mit jeweils mindestens einem Mikroreaktionsraum, mindestens einem Zulauf für Edukte und mindestens einem Ablauf für Produkte, die sich dadurch auszeichnen, dass die Mikroreaktionssysteme mit einer inertisierenden Beschichtung ausgewählt aus der Gruppe, die gebildet wird von Siliziumdioxid SiO₂, Siliziumnitrid Si₃N₄ und/oder Aluminiumoxid Al₂O₃ ausgestattet sind.

Überraschenderweise wurde gefunden, dass die Beschichtung des Trägers/Reaktors mit den genannten Stoffen eine wirksame Maßnahme darstellt, Reaktionen zwischen Träger und unterschiedlichsten Reaktanden unter unterschiedlichsten Bedingungen zu unterbinden oder zumindest erheblich zu reduzieren.

### Träger

Die Mikroreaktoren, in denen die Struktur und Maße der Mikroreaktionssysteme vorgegeben sind, können Materialkombinationen wie z.B. Silizium-Silizium, Glas-Glas, Metall-Metall, Metall-Kunststoff, Kunststoff-Kunststoff oder Keramik-Keramik oder Kombinationen dieser Materialien darstellen, auch wenn die bevorzugte Ausführungsform ein Silizium-Glas-Verbund ist. Die Strukturierung eines beispielsweise 100 bis 2000, vorzugsweise etwa 400 µm dicken Wafers erfolgt vorzugsweise mittels geeigneter Mikrostrukturierungs- bzw. Ätztechniken, z.B. dem reaktivem Ionen-Ätzen ("Reactive Ion Etching"), wodurch z.B. in Silizium dreidimensionale Strukturen unabhängig von der Kristallorientierung gefertigt werden können [vgl. James et al. in **Sci. Am. 4, 248 (1993)].** In gleicher Weise können z.B. auch Mikroreaktoren aus Glas behandelt werden. Auf diese Weise behandelte Wafer können 10 bis 100, vorzugsweise 15 bis 50 und insbesondere 20 bis 30 parallel zueinander verlaufende Mikroreaktionssysteme aufweisen, die entweder parallel oder sequenziell angesteuert und betrieben werden können. Die Geometrie, also der zweidimensionale Verlauf der Kanäle kann dabei sehr unterschiedlich sein: in Frage kommen Geraden, Kurven, Winkel und dergleichen sowie Kombinationen dieser Formelemente. Auch müssen nicht alle Mikroreaktionssysteme die gleiche Geometrie aufweisen. Die Strukturen zeichnen sich dabei durch Abmessungen von 50 bis 1500, vorzugsweise 10 bis 1000 µm und senkrechte Wände aus, wobei die Tiefe der Kanäle 20 bis 1800 und vorzugsweise etwa 200 bis 500 µm beträgt. Die Querschnitte eines jeden Mikroreaktionsraumes, die quadratisch sein können aber nicht müssen, liegen in der Regel in der Größenordnung von 20×20 bis 1500×1500 und insbesondere 100×100 bis 300×300 µm², wie dies beispielsweise auch von Burns et al. in **Trans IChemE 77(5), 206 (1999)** als typisch angegeben wird. Zur Versorgung der Mikroreaktionsräume mit Reaktanden wird der Wafer an den dafür vorgesehenen Stellen durchgeätzt.

### Beschichtung des Trägers

Nach der Mikrostrukturierung eines Substrates wird auf der Oberfläche der Reaktionsräume bzw. Kanäle eine geschlossene, inertisierende Schicht erzeugt, welche vorzugsweise eine Stärke von 50 bis 2000, vorzugsweise 100 bis 1000 und insbesondere von etwa 200 bis 400 nm aufweisen sollte. Auf diese Weise wird gewährleistet, dass es nicht zu Wechselwirkungen der Edukte oder Produkte mit der Oberfläche des Trägers, speziell eines Silizium-Wafers und damit zu unerwünschten Neben- oder gar Zersetzungsreaktionen kommt, die ansonsten vielfach beobachtet werden. Die thermische Beschichtung beispielsweise eines Silizium-Wafers mit SiO₂ erfolgt durch Erhitzen des Wafers in sauerstoffhaltiger Atmosphäre (O₂, O₂+HCl, H₂O) auf etwa 1000 bis 1100 °C. Damit kommt es zu einer Reaktion zwischen Silizium und Sauerstoff unter Ausbildung einer Oxidschicht auf der gesamten exponierten Oberfläche, also insbesondere auch in den Kanal-Mikrostrukturen. Je nach Dauer dieser thermischen Behandlung und den Oxidationsbedingungen kann die Schichtdicke des SiO₂ eingestellt werden. Bei der Oxidation handelt es sich um einen Wurzelprozess, d.h. die SiO₂-Schicht wächst quasi in den Wafer hinein. Je dicker die SiO₂-Schicht im Laufe des Prozesses wird, desto langsamer geht das weitere Wachstum voran, da der Sauerstoff zur Oxidation durch die gebildete SiO₂-Schicht diffundieren muss. Das Verfahren ist geeignet, sehr dichte und exzellent haftende, weil stofflich mit dem Silizium verbundene SiO₂-Schichten zu erzeugen. Außerdem bleibt der Wafer dabei bondbar, d. h. er kann weiterhin mit anderen Wafern, z.B. aus Glas oder Silizium verbunden werden. Generell sind auch andere Verfahren zur Beschichtung geeignet, z. B. CVD-Verfahren (Chemical Vapor Deposition) zur Herstellung von beispielsweise SiO₂-, Si₃N₄- sowie Al₂O₃-Schichten oder auch PVD-Verfahren (Physical Vapor Deposition) sowie plasmachemische Oxidationsverfahren, solange das Material dabei bondbar bleibt. Die Auswahl einer geeigneten Beschichtung sowie Beschichtungsart erfolgt in allen Fällen abhängig von der durchzuführenden chemischen Reaktion. Zum Abschluss wird der strukturierte und durch Beschichtung inertisierte Wafer durch ein geeignetes Verfahren, z. B. anodisches Bonden, mit einem weiteren Wafer, z.B. aus Glas, vorzugsweise Pyrex-Glas, verbunden und die einzelnen Strömungskanäle dicht zueinander verschlossen. Selbstverständlich sind abhängig vom Substratmaterial auch andere Aufbau- und Verbindungstechniken zur Realisierung dichter Strömungssysteme möglich, die sich dem Fachmann selbstverständlich erschließen, ohne dass dieser hierzu erfinderisch tätig werden muss.

### Strukturierung der Mikroreaktoren

Die Mikroreaktoren können sich in eine oder mehrere Mischzonen, eine oder mehrere Reaktionszonen, eine oder mehrere Misch- und Reaktionszonen, eine oder mehrere Heiz- und Kühlzonen oder beliebige Kombinationen davon gliedern. Vorzugsweise weisen sie drei Zonen, nämlich zwei Reaktions- und eine Kühlzone auf, wodurch insbesondere zwei- oder mehrstufige Reaktionen in flüssiger oder auch gasförmiger Phase effizient durchgeführt werden können. In der ersten Zone erfolgt dabei die Vermischung zweier Reaktionsteilnehmer sowie deren Reaktion, in der zweiten findet die Reaktion zwischen dem Produkt der ersten Zone und einem weiteren Edukt statt, während in der dritten der Abbruch der Reaktion durch Absenken der Temperatur bewirkt wird. Dabei ist es nicht zwingend erforderlich, die erste und die zweite Reaktionszone thermisch streng voneinander zu trennen. Wenn nämlich die Zugabe eines weiteren Reaktionspartners erforderlich ist oder anstelle eines Mischungspunktes mehrere gewünscht werden, kann dies über die Zone 1 hinaus auch noch in der Reaktionszone 2 stattfinden. Die Mikroreaktionssysteme können dabei sequentiell oder aber gleichzeitig, d.h. parallel mit jeweils definierten Eduktmengen betrieben werden. Eine weitere Möglichkeit, wie sich die Mikroreaktionssysteme in ihrer Geometrie unterscheiden können, besteht im Mischungswinkel, unter dem die Edukte aufeinander treffen und der zwischen 15 und 270° und vorzugsweise 45 bis 180° liegen kann. Des weiteren ist es möglich, jede der drei Zonen unabhängig voneinander zu kühlen oder zu heizen bzw. die Temperatur innerhalb einer Zone beliebig zu variieren, wobei die Reaktionsräume in diesem Beispiel Kanäle darstellen, deren Länge pro Zone 10 bis 500 mm betragen kann.

### Beispiele

Für die Untersuchungen wurde ein Mikroreaktor bestehend aus einem 400 µm dicken Silizium-Wafer eingesetzt, der mit einem Pyrexglas-Wafer verbunden war. In den Siliziumwafer waren 20 parallele, linear verlaufende Kanäle mit einer Tiefe von 300 µm und einem Querschnitt der Mikroreaktionsräume von 300 x 300 µm² eingeätzt. Der Silizium-Wafer war mit einer ca. 400 nm dicken SiO₂-Schicht beschichtet. Die Kanäle wurden parallel betrieben und waren jeweils zur Eduktaufgabe und zur Produktabnahme durchgeätzt. Untersucht wurde die Bildung von Perameisensäure durch Einwirkung von Wasserstoffperoxid auf Ameisensäure. Die Vergleichsuntersuchungen wurden mit einem gleichartigen, aber unbeschichteten Mikroreaktor durchgeführt. Die Ergebnisse sind in Tabelle 1 zusammengefasst. Die Beispiele 1 bis 8 sind erfindungsgemäß, die Beispiele V1 bis V6 dienen zum Vergleich.

**Tabelle 1:**

| **Oxidation von Ameisensäure *)** | | | | | | |
|---|---|---|---|---|---|---|
| Bsp. | Zusammensetzung Reaktionssystem | | | T °C | t h | Ergebnis |
| | HCOOH Gew.-% | H₂O₂ Gew.-% | Wasser Gew.-% | | | |
| V1 | 0 | 60 | 40 | 25 | 24 | Kein Masseverlust, keine Oberflächenveränderung |
| V2 | 10 | 15 | 75 | 25 | 48 | Kein Masseverlust, keine Oberflächenveränderung |
| V3 | 0 | 60 | 40 | 50 | 24 | Auf dem Si-Wafer haften Gasblasen in den Kanälen |
| V4 | 0 | 60 | 40 | 50 | 48 | Auf dem Si-Wafer haften Gasblasen in den Kanälen |
| V5 | 10 | 15 | 75 | 50 | 24 | Heftiges Sprudeln, Persäurezersetzung |
| V6 | 10 | 15 | 75 | 50 | 48 | Heftiges Sprudeln, Persäurezersetzung |
| 1 | 0 | 60 | 40 | 25 | 24 | Kein Masseverlust, keine Oberflächenveränderung |
| 2 | 0 | 60 | 40 | 25 | 48 | Kein Masseverlust, keine Oberflächenveränderung |
| 3 | 0 | 60 | 40 | 50 | 24 | Kein Masseverlust, keine Oberflächenveränderung |
| 4 | 0 | 60 | 40 | 50 | 48 | Kein Masseverlust, keine Oberflächenveränderung |
| 5 | 10 | 15 | 75 | 25 | 24 | Kein Masseverlust, keine Oberflächenveränderung |
| 6 | 10 | 15 | 75 | 25 | 48 | Kein Masseverlust, keine Oberflächenveränderung |
| 7 | 10 | 15 | 75 | 50 | 24 | Kein Masseverlust, keine Oberflächenveränderung |
| 8 | 10 | 15 | 75 | 50 | 48 | Kein Masseverlust, keine Oberflächenveränderung |

| | | | | | | |
|---|---|---|---|---|---|---|
| *) Die Versuche V1, V3, V4 sowie 1 bis 4 wurden mit 30 Gew.-%igem H₂O₂ durchgeführt. In allen anderen Fällen betrug die Konzentration 100 Gew.-% | | | | | | |

## Patentansprüche

1. Mikroreaktoren, bestehend aus mindestens einem auf einen Träger aufgebrachten Mikroreaktionssystem mit jeweils mindestens einem Mikroreaktionsraum, mindestens einem Zulauf für Edukte und mindestens einem Ablauf für Produkte, **dadurch gekennzeichnet, dass** die Mikroreaktionssysteme mit einer inertisierenden Beschichtung ausgewählt aus der Gruppe, die gebildet wird von Siliziumdioxid, Siliziumnitrid und/oder Aluminiumoxid ausgestattet sind.

2. Mikroreaktoren nach Anspruch 1, **dadurch gekennzeichnet, dass** der Träger ein Silizium-Glas-Verbund darstellt,

3. Mikroreaktoren nach den Ansprüchen 1 und/oder 2, **dadurch gekennzeichnet, dass** die Mikroreaktionssysteme durch geeignete Mikrostrukturierungstechniken aufgebracht werden.

4. Mikroreaktoren nach mindestens einem der Ansprüche 1 bis 3, **dadurch gekennzeichnet, dass** sie 10 bis 100 zueinander parallel verlaufende Mikroreaktionssysteme aufweisen.

5. Mikroreaktoren nach mindestens einem der Ansprüche 1 bis 4, **dadurch gekennzeichnet, dass** die Inertisierungsschicht geschlossen und 50 bis 2000 nm dick ist.

6. Mikroreaktoren nach mindestens einem der Ansprüche 1 bis 5, **dadurch gekennzeichnet, dass** die Reaktionsräume in mindestens einer Raumdimension Abmessungen im Bereich von 50 bis 1500 µm aufweisen.

7. Mikroreaktoren nach mindestens einem der Ansprüche 1 bis 6, **dadurch gekennzeichnet, dass** die Reaktionsräume eine Tiefe von 20 bis 1800 µm aufweisen.

8. Mikroreaktoren nach mindestens einem der Ansprüche 1 bis 7, **dadurch gekennzeichnet, dass** die Reaktionsräume Querschnitte von 20x20 bis 1500x1500 µm² aufweisen.

9. Mikroreaktoren nach mindestens einem der Ansprüche 1 bis 8, **dadurch gekennzeichnet, dass** die Reaktionsräume Kanäle darstellen und eine Länge von 1 bis 500 mm aufweisen.

10. Mikroreaktoren nach mindestens einem der Ansprüche 1 bis 9, **dadurch gekennzeichnet, dass** die Reaktionsräume eine oder mehrere Mischzonen, eine oder mehrere Reaktionszonen, eine oder mehrere Misch- und Reaktionszonen, eine oder mehrere Heiz- bzw. Kühlzonen oder beliebige Kombinationen davon aufweisen.
